# EUROPÄISCHE PATENTANMELDUNG

(11) **EP 1 967 890 A2**
(43) Veröffentlichungstag der Anmeldung: **10.09.2008**
(21) Anmeldenummer: 08003762.5
(22) Anmeldetag: 29.02.2008
(51) Int. Cl.: G02B 27/14

(54) **Verfahren zur Herstellung multispektraler Filterbaugruppen sowie eine multispektrale Filteranordnung**

(30) Priorität: 03.03.2007 DE 102007011112
(71) Anmelder: Jena-Optronik GmbH, 07745 Jena (DE)
(72) Erfinder: Voss, Burkart, Prof. Dr., 07778 Dorndorf (DE); Fritsch, Holger, Dr., 07749 Jena (DE); Schallenberg, Uwe, 07743 Jena (DE)
(74) Vertreter: Freitag, Joachim

(57) **Zusammenfassung**

Die Erfindung betrifft ein Verfahren zur Herstellung von multispektralen Filterbaugruppen, die aus mehreren separat beschichteten Filterelementen zusammengesetzt sind, sowie eine Filteranordnung für Zeilenkameras zur multispektralen Bildaufnahme, insbesondere für die Fernerkundung der Erde.
Die Aufgabe der Erfindung, eine neue Möglichkeit zur Herstellung von mehrkanaligen multispektralen Filterbaugruppen zu finden, die das Fertigungs- und Kostenrisiko von kompakten multispektralen Filterbaugruppen auch bei zunehmender Anzahl der Spektralkanäle reduziert, wird erfindungsgemäß gelöst, indem Substratbarren (3) aus für die zu filternde Wellenlänge des jeweiligen Filterelements (4) geeigneten optischem Material zuerst durch beliebige Formgebungsverfahren und Bearbeitungsverfahren maßhaltig hergestellt und erst danach unterschiedliche beschichtet, nach ihrer spektralen Güte selektiert und abschließend in geeigneter Weise zusammengesetzt werden.

## Beschreibung

Die Erfindung betrifft ein Verfahren zur Herstellung von multispektralen Filterbaugruppen, die aus mehreren separat beschichteten Filterelementen zusammengesetzt sind, sowie Filteranordnungen für Zeilenkameras zur multispektralen Bildaufnahme, insbesondere für die Fernerkundung der Erde.

In Instrumenten zur Fernerkundung der Erde werden für eine multispektrale Abbildung und Analyse der (beim Überflug) beobachteten Erdsegmente mehrere separate Spektralkanäle benötigt. In Abhängigkeit von der speziellen Auslegung des jeweiligen Instrumentes und der Anzahl der zu realisierenden Spektralkanäle kommen verschiedene Lösungsansätze in Betracht. Bei klassischen Mehrkopfkamerasystemen, bei denen jeder Bildaufnahmeeinheit eine separate optische Einheit zugeordnet ist, wird die spektrale Selektion beispielsweise durch als Filterelemente ausgeführte Eintrittsfenster realisiert (z.B. Multispektralkamera MKF-6, VEB Carl Zeiss Jena).

Aktuelle Instrumente zur Erdfernerkundung sind vielfach mit nur einer Bildaufnahmeeinheit ausgerüstet mit der mehrere spektrale Kanäle aufgenommen werden. Dabei werden immer häufiger Zeilenkameras, so genannte lineare Pushbroom-Scanner eingesetzt, die eine eindimensionale, quer zur Flugrichtung ausgerichtete Sensorzeile durch die Flugbewegung über das zu beobachtende Gebiet bewegen und dadurch eine zweidimensionale Aufnahme ohne zusätzliche mechanische Scanbewegungen ermöglichen. Damit lassen sich robuste und zuverlässige Systeme realisieren. Um eine spektrale Selektion der Aufnahme zu ermöglichen, wird eine Filtereinheit, bestehend aus unterschiedlichen spektralen Filtern (Filterbaugruppe), in den optischen Strahlengang vor einer Bildaufnahmeeinheit mit mehreren parallel angeordneten Sensorzeilen angebracht. Dazu werden sehr lange streifenförmige spektrale Filter benötigt.

Da für die spektral selektive Aufnahme ein und desselben Bodenstreifens aus Kostengründen nur eine Abbildungsoptik und möglichst auf einem Chip integrierte Sensorzeilen (ggf. ein Matrixsensor) genutzt werden sollen, ist die einfachste Lösung für die streifenförmige Ausführung der multispektralen Filterbaugruppe ein schrittweises streifenförmiges Abscheiden von verschiedenen spektralen Filtern auf einer durchgehenden Substratplatte.

Wird die gesamte Filterbaugruppe auf einer einheitlichen Substratplatte realisiert, entfällt zwar jegliches Risiko eines fehlerhaften oder ungenauen Zusammenbaus aus einzelnen Filterelementen, jedoch steigt das Fehler- und Ausfallrisiko (Ausschussquote) für die Filterbaugruppe im Herstellungsprozess mit zunehmender Anzahl der aufzubringenden spektralen Filter sprunghaft an. Aufgrund der mit diesem Risiko verbundenen Aufwände und Kosten werden für heutige Multispektralkameras selten Substratplatten mit mehr als 6 verschiedenen spektralen Filtern beschichtet.
Ein weiterer Nachteil der ganzheitlichen Filterplatte resultiert aus der fehlenden Möglichkeit, die Substratdicke den unterschiedlichen optischen Weglängen der von den Filtern durchgelassenen Spektralanteile anzupassen, wodurch die exakte optische Abbildung in bestimmten Spektralkanälen gestört wird.

Deshalb ist eine weitere Methode zur Herstellung multispektraler Filterbaugruppen bekannt geworden, die folgende Schritte realisiert:
I) Herstellung mehrerer Substratplatten, deren Dicke an die optische Weglänge für die benötigten Filterwellenlängen angepasst ist;
II) Mehrfachbeschichtung der unterschiedlichen Substratplatten zur Erzeugung großflächiger Spektralfilter für alle benötigten Spektralfilter;
III) Trennen der unterschiedlich beschichteten Substratplatten in quaderförmige Spektralfilterelemente durch Sägen;
IV) Selektieren geeigneter Filterelemente durch Qualitätsprüfung (Einhaltung des geforderten Wellenlängenbereichs, Homogenität der Filtereigenschaften innerhalb des Filterelements, mechanische Unversehrtheit der Kanten);
V) Assembling einer multispektralen Filterbaugruppe durch Aneinanderfügen und Fixieren von ausgewählten Filterelementen mit unterschiedlichem Spektralverhalten.

Die Nachteile dieser Methode liegen in der spanenden Zerteilung der mit sensibler Filterbeschichtung versehenen Substrate, wodurch eine unzulässige Kontamination mit Staubpartikeln, aber auch mit Chemikalien, die zur Kühlung während des Trennvorgangs oder zur nachträglichen Reinigung der Filterelemente eingesetzt werden, unvermeidlich ist.
Ferner entstehen beim Trennvorgang sowohl an den Substratkanten als auch an den Filterkanten Mikrobrüche, die zu unerwünschten Streulichteffekten führen, wenn sie nicht durch Bearbeitungsschritte, wie Schleifen und Polieren, beseitigt werden, durch die jedoch das Kontaminationsrisiko der Filterschichten weiter zunimmt.
Verzichtet man auf Schleif- und Polierschritte nach dem Trennen, ist die erforderliche Maßhaltigkeit für das Zusammensetzen einer Filterbaugruppe kaum zu erreichen.

Zusammengefasst wird das Design und die Herstellung von multispektralen Filterbaugruppen maßgeblich durch folgende Randbedingungen beeinflusst:
- mit zunehmender Anzahl der Spektralkanäle steigt die Motivation, die Filter so schmal wie möglich zu gestalten, um so das benötigte optisch korrigierte Bildfeld der Kamera zu begrenzen;
- unterschiedliche Wellenlängen haben durch ein und dasselbe Substrat eine unterschiedliche optische Weglänge, die zu Bildfehlern (Unschärfen) in der Sensorebene führen, wobei sich die Fehler mit wachsender Gesamtbreite des abzudeckenden Spektralbereiches verstärken;
- mit zunehmender Abtastbreite des Instrumentes, die durch zunehmende Länge der verfügbaren Sensorzeilen initiiert wird, wächst die erforderliche Länge der spektralen Filter, wodurch sich die Anforderungen an die Homogenität der spektrale Eigenschaften über die gesamte Filterlänge und somit an die Konstanz des mehrstufigen Herstellungsprozesses der Filter erhöhen, die die Kosten exponentiell ansteigen lassen.

Der Erfindung liegt die Aufgabe zugrunde, eine neue Möglichkeit zur Herstellung von mehrkanaligen multispektralen Filterbaugruppen zu finden, die das Fertigungs- und Kostenrisiko bei der Herstellung von hochwertigen kompakten multispektralen Filterbaugruppen reduziert und insbesondere bei zunehmender Anzahl der Spektralkanäle in Grenzen hält.

Erfindungsgemäß wird die Aufgabe bei einem Verfahren zur Herstellung von multispektralen Filterbaugruppen, die aus mehreren separat beschichteten Filterelementen zusammengesetzt werden, durch folgende Schritte gelöst:
- Herstellung von Substratbarren aus optischem Material, das für die zu filternde Wellenlänge des jeweiligen Filterelements ausreichende Transparenz aufweist, durch beliebige Formgebungsverfahren und anschließende Oberflächenbearbeitungsverfahren zur Erreichung einer durch ein optisches Aufnahmesystem vorgegebenen Maßhaltigkeit;
- Beschichtung der Substratbarren mit unterschiedlichen spektralen Filtern zur Erzeugung verschiedener Filterelemente für eine multispektrale Filterbaugruppe;
- Selektieren von so erzeugten Filterelementen mit hinreichender Güte ihrer spektralen Eigenschaften;
- Assembling der Filterbaugruppe durch Zusammenfügen und Fixieren der selektierten Filterelemente mit unterschiedlicher spektraler Charakteristik.

Vorteilhaft werden die Substratbarren für Filterelemente unterschiedlicher Wellenlängen aus verschiedenen Materialien gefertigt.
Es ist ebenfalls zweckmäßig, die Substratbarren für Filterelemente unterschiedlicher Wellenlängen mit unterschiedlicher Dicke herzustellen oder eine Kombination von verschiedenen Materialien und unterschiedlicher Dicke anzuwenden.

Vorzugsweise werden die Substratbarren in einer langgestreckten Quaderform gefertigt.
Zusätzlich können in die Substratbarren bei der maßhaltigen Herstellung an beabsichtigten Fügeflächen Positionierhilfen in Form von Profilkanten eingearbeitet werden.
Diese Positionierhilfen werden zweckmäßig im Zuge der Formgebungsverfahren der Substratbarren eingebracht. Sie können aber auch vorteilhaft nach dem Formgebungsverfahren der Substratbarren mit spanenden Verfahren eingebracht werden.
Die Substratbarren können nach der maßhaltigen Herstellung entweder einzeln beschichtet werden oder es werden zweckmäßig mehrere Substratbarren für Filterelemente gleicher Wellenlänge gleichzeitig beschichtet. Für letztere Beschichtungsherstellung werden die Substratbarren vorzugsweise in einem vorübergehend zusammengefügten Paketverbund beschichtet.

Um das Assembling der finalen Filterbaugruppe zu erleichtern werden vorteilhaft breitere Substratbarren zur Integration von einigen wenigen Filterelementen mit Filtern verschiedener Wellenlängen maßhaltig hergestellt und anschließend in aufeinanderfolgenden Beschichtungsprozessen auf unterschiedlichen Oberflächenbereichen mit unterschiedlichen spektralen Filtern beschichtet.

Des Weiteren wird die Aufgabe der Erfindung bei einer Filteranordnung für Zeilenkameras zur multispektralen Bildaufnahme mit mehreren unabhängig auslesbaren Sensorzeilen, bei der mehrere separat beschichtete Filterelemente unterschiedlicher spektraler Charakteristik zu einer plattenförmigen Filterbaugruppe zusammengesetzt sind, dadurch gelöst, dass Substratbarren aus optischem Material, das für die vom jeweiligen Filterelement zu filternden Wellenlängen ausreichende Transparenz aufweist, in einem der Filterbeschichtung vorgelagerten Formgebungs- und Oberflächenbearbeitungsprozess an unterschiedlichen zu transmittierenden Wellenlängen angepasst vorgeformt sind, um Abbildungsfehler infolge unterschiedlicher optischer Weglängen und Ablenkungswinkel der gefilterten Spektralanteile zu minimieren.

Vorteilhaft sind die Substratbarren für Filterelemente unterschiedlicher Wellenlängen jeweils in einer solchen Dicke vorgefertigt, die an die optische Weglänge der durch das aufzubringende Filter vorgegebenen spektralen Wellenlängen angepasst ist.
In einer besonders vorteilhaften Gestaltung sind die Substratbarren für Filterelemente unterschiedlicher Wellenlänge jeweils in einer solchen Dicke, die an die optische Weglänge der spektralen Filterwellenlängen angepasst ist, und mit einer gewölbten Oberflächenform vorgefertigt, die zur Verringerung von optischen Abbildungsfehlern infolge spektral unterschiedlicher Ablenkungswinkel ausgebildet ist.

Zur Erleichterung des Zusammenfügens der Filterelemente unterschiedlicher Wellenlängen weisen die Substratbarren an ihren Fügeflächen vorteilhaft Positionierhilfen auf, mit denen die einzelnen Filterelemente selbstjustierend zu der multispektralen Filterbaugruppe zusammensetzbar sind.
Als Positionierhilfen sind dazu die Fügeflächen benachbarter Filterelemente zweckmäßig gegenüberliegend mit Nut und Feder versehen. Weitere vorteilhafte Positionierhilfen sind an gegenüberliegenden Fügeflächen angebrachte gegensätzlichen Stufen oder Keilprofile. Als besondere Ausführung der Anbringung gegenüberliegender Stufen können die Substratbarren für benachbarte Filterelemente als alternierend angeordnete T-Profile geformt sein.

Die Grundidee der Erfindung besteht darin, abweichend zum Stand der Technik das mit Filtern zu beschichtende Substrat vor der Beschichtung auf Maßhaltigkeit (z.B. langgestreckte quaderförmige Barren) zu bringen und die so entstehenden Einzelsubstrate anschließend zu beschichten. Das bedeutet im Falle mehrerer zeilenförmiger Filterelemente, dass einzelne, unbeschichteten Substratbarren durch geeignete Bearbeitungsverfahren (beispielsweise Aussägen oder Warmverformung und anschließendes Schleifen und Polieren) angefertigt und zugleich deren optische Dicken an die Transmissionswellenlänge des Filters hochgenau angepasst werden können.
Die dadurch garantiert maßhaltigen Einzelsubstrate (Barren) werden dann einzeln oder gleichzeitig in größeren Stückzahlen den unterschiedlichen Beschichtungsprozessen zur Erzeugung der entsprechend unterschiedlichen spektralen Filterelemente unterzogen.
Anschließend an die Beschichtung werden die Filterelemente ohne weitere Nachbehandlung nach der Güte ihrer spektralen Eigenschaften selektiert und nur solche Filterelemente, die die jeweilige spektrale Spezifikation erfüllen, verwendet, um sie mit gleichfalls nach ihrer Spezifikation selektierten Filterelementen anderer spektraler Charakteristika zu einer multispektralen Filterbaugruppe zusammenzusetzen.

Mit der Erfindung ist es möglich, mehrkanalige multispektrale Filterbaugruppen zu realisieren, bei denen das Fertigungs- und Kostenrisiko bei der Herstellung von spektral unterschiedlichen, optisch hochwertigen Filterelementen reduziert ist und sich insbesondere auch bei zunehmender Anzahl der Spektralkanäle in vertretbaren Grenzen hält. Es können die Vorteile des oben beschriebenen Streifenaufbaus der Filterbaugruppen des Standes der Technik beibehalten und neben der entscheidenden Kostenminimierung weitere Vorteile in Herstellungsprozess und Gesamtperformance der Filterbaugruppe erreicht werden:

Die Erfindung soll nachstehend anhand von Ausführungsbeispielen näher erläutert werden. Die Zeichnungen zeigen:
- Fig. 1:: eine stilisierte Darstellung eines typischen Einsatzfalls der erfindungsgemäßen Filterbaugruppe,
- Fig. 2:: den Prinzipaufbau einer erfindungsgemäßen Filterbaugruppe zur mehrkanaligen Bildaufnahme mit einer multispektral ausgelegten Zeilenkamera (Pushbroom-Scanner),
- Fig. 3:: Darstellungen von verschiedenen Positionierhilfen, die an den Fügeflächen der Substratbarren vor deren Beschichtung eingebracht werden, um nach der Beschichtung eine selbstjustierende Zusammenfügung beim Assembling der Filterbaugruppe zu ermöglichen,
- Fig.4:: zwei Ausführungen mit Positionierhilfen, die zugleich als Abstandshalter ausgestaltet sind, um definierte Abstände für optische Sperrschichten zwischen den Filterelementen zu schaffen,
- Fig. 5:: eine Ausführung der erfindungsgemäßen Filterbaugruppe mit breiteren gemeinsamen Substratbarren für einige wenige verschiedene Filter, die Assembling-Aufwand verringert und einen Kompromiss zwischen Beschichtungsrisiko und Zusammensetzungsaufwand darstellt,
- Fig. 6:: eine Ausführung der erfindungsgemäßen Filterbaugruppe mit unterschiedlichen Dicken der Filterelemente zur Anpassung der unterschiedlichen optischen Weglängen der gefilterten Strahlung,
- Fig. 7:: eine Ausführung der erfindungsgemäßen Filterbaugruppe mit unterschiedlichen Dicken und gewölbt geformter Oberfläche der Filterelemente zur Verringerung von spektral bedingten optischen Abbildungsfehlern durch Anpassung an spektral unterschiedliche optische Weglängen und Ablenkungswinkel.

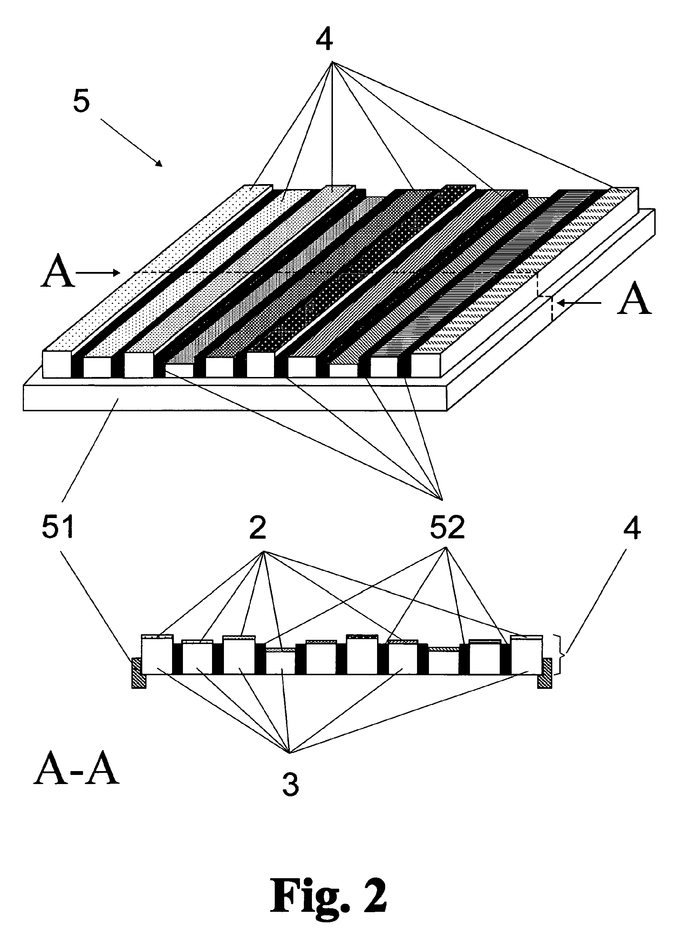

Eine Filterbaugruppe, wie sie in ihrer Gesamtheit in Fig. 2 dargestellt ist, soll zunächst - zur Erläuterung ihrer besonderen Einsatzanforderungen beim Einsatz in einer multispektralen Zeilenkamera (sog. Pushbroom-Scanner) erläutert werden.

Bei einem solchen Pushbroom-Scanner sind mehrere einzelne Sensorzeilen 11, 12, 13, usw. und diesen einzeln zugeordnete spektrale Filter 21, 22, 23 usw. quer zur Bewegungsrichtung des Instrumentes (Flugrichtung) angeordnet. Damit werden zeilenweise Informationen ein und desselben Bodenstreifens A, B, C, etc. in unterschiedlichen Spektralkanälen zeitversetzt nacheinander, jedoch synchron zur Bewegung des Instrumentes über einer Szene (beispielsweise der Erde) aufgenommen.

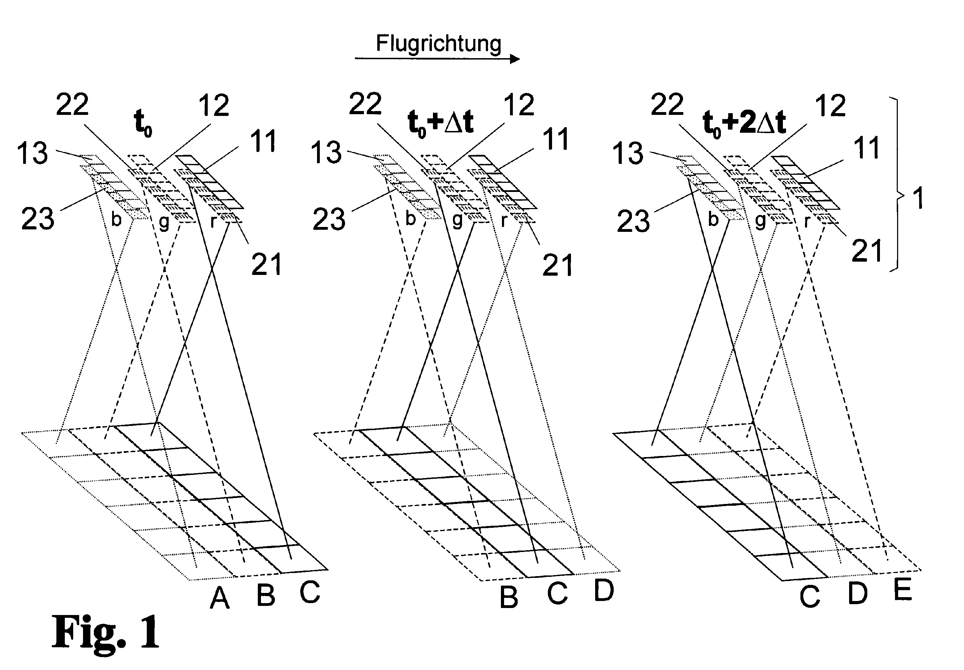

In der schematischen Darstellung gemäß Fig. 1 detektiert das Instrument zunächst mit einer Sensorzeile 11 die roten Spektralanteile des Bodenstreifens C, die durch das rote Filter 21 selektiert wurden. Gleichzeitig werden durch das grüne Filter 22 mit der grünen Sensorzeile 12 ein benachbarter Bodenstreifen B sowie mit der Sensorzeile 13 über das blaue Filter 23 der weitere Bodenstreifen A erfasst. Nach einem definierten Zeitintervall Δt (Zeitpunkt t₀+Δt) wird der Bodenstreifen C durch das grüne Filter 22 mit der Sensorzeile 12 erfasst. Nach Ablauf eines weiteren Zeitintervalls Δt, d.h. zum Zeitpunkt t₀+2Δt, wird der Bodenstreifen C dann durch die mit dem blauen Filter 23 gekoppelte Sensorzeile 13 aufgenommen. Damit ist ein und derselbe Bodenstreifen C nacheinander durch alle (hier - zur Vereinfachung und ohne Beschränkung der Allgemeinheit - nur drei) Spektralkanäle aufgenommen worden, während die anderen Kanäle (Sensorzeile 11 mit Filter 12 und Sensorzeile 12 mit Filter 22) zur Zeit t₀+Δt bereits die ihnen zugeordneten Spektralanteile der nächsten Bodenstreifen C bzw. B und zum Zeitpunkt t₀+2Δt die Bodenstreifen D bzw. C aufnehmen.

Da für die spektral selektive Aufnahme eines Bodenstreifens A, B, C, D etc. aus Kostengründen eine gemeinsame Abbildungsoptik und auf einem Chip (z.B. in einem Matrixsensor) integrierte Sensorzeilen 11, 12, 13 etc. genutzt werden sollen, sind bei der streifenförmigen Ausführung der multispektralen Filterbaugruppe 2 besonders schmale Filterelemente 4 erforderlich. Dadurch steigt das Risiko, die bereits wertintensiv hergestellten großflächigen Filtersubstrate bei deren Trennung in schmale Barren, zu beschädigen (zusätzliche Bruchgefahr neben den bereits oben benannten Kontaminationsproblemen).

Das Verfahren zur Herstellung einer multispektralen Filterbaugruppe in Form einer Filterplatte für einen Pushbroom-Scanner weist folgende Schrittfolge auf:
1. Herstellung von maßhaltigen Substratbarren 3 durch beliebige Herstellungsverfahren in freier Wahl des optischen Materials und optischer Korrekturmaßnahmen;
2. Beschichtung verschiedener Substratbarren mit unterschiedlichen spektralen Filtern 2 zur Erzeugung von Filterelementen 4 für eine multispektrale Filterbaugruppe 5;
3. Selektieren der Filterelemente 4 mit hinreichender Güte ihrer spektralen Eigenschaften;
4. Assembling der Filterbaugruppe 5 durch Zusammenfügen und Fixieren von ausgewählten Filterelementen 4 mit unterschiedlicher spektraler Charakteristik.

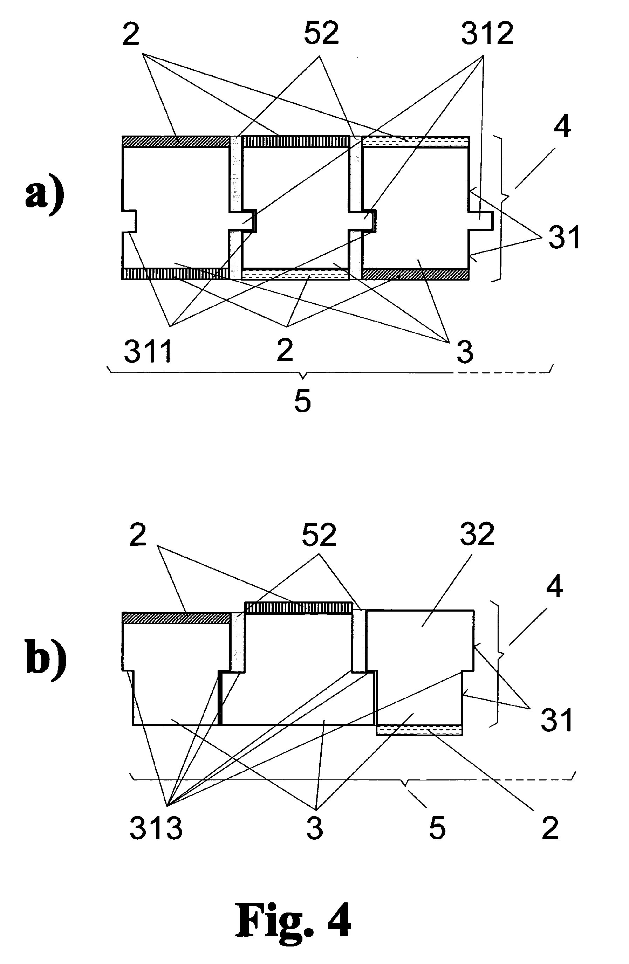

Im Gegensatz zum Stand der Technik werden in einem Verfahren gemäß der Erfindung die für die Filterelemente 4 benötigten Substratbarren 3 vor der Beschichtung auf des benötigte Endmaß gebracht. Das bedeutet, dass eine Vielzahl von Substratbarren 3, ohne dass bereits eine Beschichtung aufgebracht wurde, durch geeignete Bearbeitungsverfahren (sowohl durch Formgebungsverfahren, wie z.B. Gießen, Warmverformung etc., als auch Trennverfahren, wie Aussägen, Brechen etc., sowie anschließendes Schleifen und Polieren) in die gewünschte Form und auf die erforderlichen Maße gebracht werden.
Im Anschluss daran werden die somit garantiert maßhaltigen Substratbarren 3 einzeln oder, um das Risiko des Beschichtungsvorgangs zu minimieren, gleichzeitig in größeren Stückzahlen mit den entsprechenden spektralen Filtern 2 beschichtet. Diese spektralen Filter 2 können sowohl auf der Oberseite, der Unterseite (wie in Fig. 4a gezeigt) oder aber auch auf beiden Seiten der Substratbarren 3 (wie in Fig.4b zu sehen) abgeschieden sein.

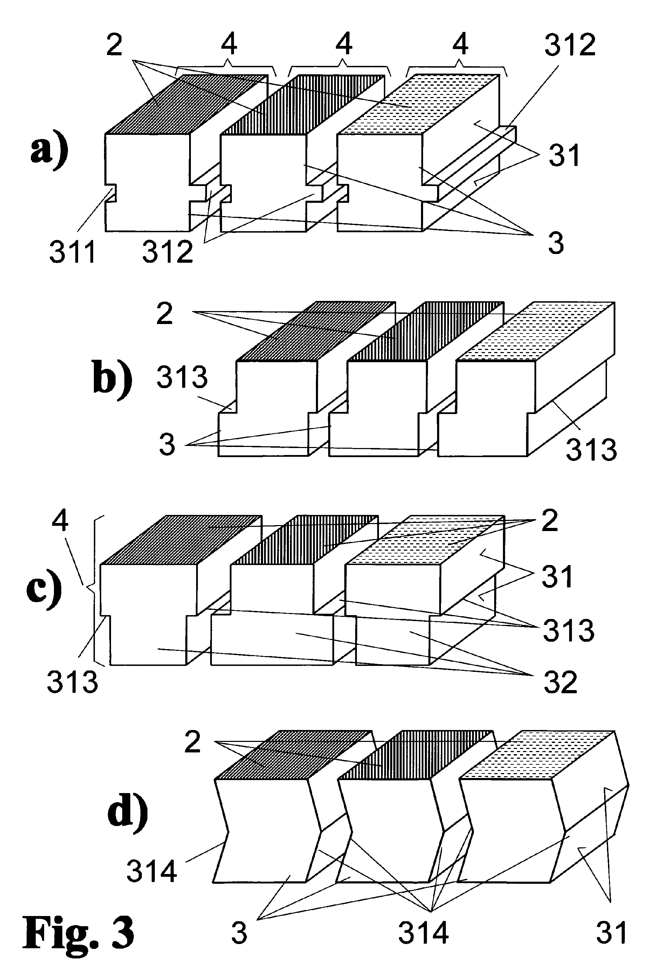

Bei der Herstellung der maßhaltigen Substratbarren 3 kann zum Zwecke der vereinfachten Justierung der Filterelemente 4 beim finalen Assembling der Filterbaugruppe 5 eine mechanische Profilierung (Nuten, Stufen etc.) an den Fügeflächen 31 erfolgen. Beispiele dafür sind in Fig. 3 angegeben.
Die Fügeflächen 31 haben in einer Ausführung gemäß Fig. 3a korrespondierend Nut 311 und Feder 312, wodurch beim finalen Assembling lediglich ein einfach umlaufender äußerer Rahmen 51 erforderlich ist. Zusätzlich können die Fügeflächen 31 miteinander verklebt werden. In jedem Fall ist beim Assembling zwischen jeweils zwei Filterelementen 4 eine optische Sperrschicht 52 zur Trennung der spektralen Kanäle einzubringen, wie in Fig. 2 gezeigt. Die Sperrschicht 52 kann bei gewünschter Verklebung in Form eines dunkel pigmentierten Klebstoffes ausgeführt und somit mit Fixierungsfunktion kombiniert werden, wie in Fig. 4a und 4b stilisiert gezeichnet.

In Fig. 3b ist eine Ausführung gezeigt, die eine angepasste Stufenform 313 aufweist, die - bei fest vorgegebener spektraler Reihenfolge der unterschiedlichen Filterelemente 4 innerhalb der Filterbaugruppe 5 - auch als alternierend geformtes T-Profil 32 der einzelnen Substratbarren 3 gemäß Fig. 3c ausgeführt sein kann. In den beiden vorgenannten Fällen sind beim finalen Assembling dreidimensionale Rahmen 51 mindestens bis zu einer eventuell vorgesehenen Verklebung erforderlich.
Mit der in Fig. 3d angegebenen selbstjustierenden Keilform 315 kann - ähnlich wie bei der Anwendung von Nuten 311 und Federn 312 - ein für das Assembling der Filterbaugruppe 5 vorgesehener Rahmen 51 zum Justieren und Fixieren auf einen umlaufenden Außenring beschränkt werden.

Das sukzessive (mehrfache) Beschichten der Substrats zur Erzeugung von Filterelementen 4 gleicher spektraler Eigenschaften kann sowohl auf einzelnen Substratbarren 3 als auch auf einem Paketverbund, der aus einer Mehrzahl gleicher Substratbarren 3 vorübergehend zusammengefügt wird, erfolgen. Letzteres ist insbesondere dann angezeigt, wenn wegen hoher Qualitätsansprüche eine Vielzahl von gleichen Filterelementen 4 gefertigt werden muss, um im nachfolgenden Selektionsschritt diejenigen Filterelemente 4 mit ausreichender Güte ihrer spektralen Eigenschaften (wie Einhaltung der spektralen Bandbreite des Filters 2 und Konstanz der Filtereigenschaften über die volle Länge des Substratbarrens 3) auszuwählen.

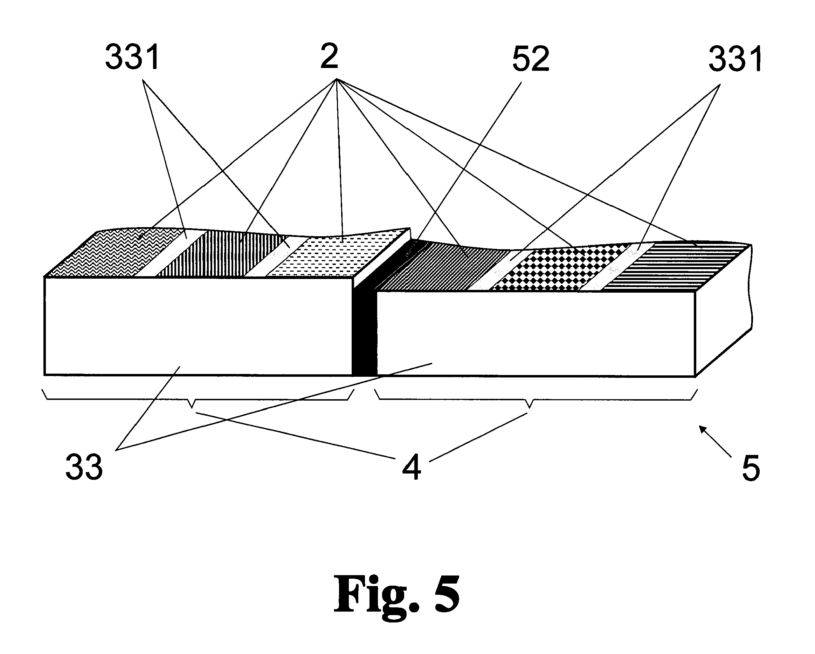

Für eine alternative Variante des Verfahrens ist es sinnvoll, mehrere (bis zu 4) verschiedene spektrale Filter 2 auf einen breiter ausgeführten gemeinsamen Substratbarren 33 in aufeinanderfolgenden Beschichtungsprozessen nebeneinander aufzubringen, um den Fügeaufwand (beim Assembling) zu verringern, indem ein Kompromiss zwischen dem verminderten Fertigungsaufwand für die Substratbarren 3 und der Fehlerquote bei der Mehrfachbeschichtung zur Erzeugung verschiedener spektraler Filter 2 auf einem gemeinsamen Substratbarren 33 gefunden wird. In dem Beispiel gemäß Fig. 5 sind jeweils 3 Filter 2 auf einem gemeinsamen Substratbarren 33 aufgebracht, die zur Vermeidung des Übersprechens der optischen Kanäle zwischen den einzelnen Filtern 2 durch Blendenbereiche 331 voneinander separiert werden. Zwischen den einzelnen gemeinsamen Substratbarren 33 sind Sperrschichten 52 einzufügen, wie bereits in den vorhergehenden Beispielen beschrieben.

Durch die erfindungsgemäße Herstellung der Filterbaugruppe 5 können die Vorzüge des bekannten Streifenfilterassemblings nach dem Stand der Technik beibehalten und weitere besondere Ausgestaltungen und Eigenschaften der Filterbaugruppe 5 erzielt werden:
a) Mehrere maßhaltige Substratbarren 3 für Filterelemente 4 mit gleicher Wellenlängencharakteristik können gleichzeitig beschichtet werden, so dass sich der Beschichtungsprozess (gegenüber der Substratplattenbeschichtung gemäß dem Stand der Technik) nicht verlängert. Durch die vor der Beschichtung stattfindenden Formgebungsprozesse ist der anschließende Selektionsschritt nur noch durch üblichen Beschichtungstoleranzen (und nicht mehr durch Qualitätsbeeinträchtigungen infolge mechanischer Teilung von beschichteten Substratplatten) beeinflusst. Aufgrund des Wegfalls der mechanischen Bearbeitung von bereits beschichteten Substraten sinkt der nicht verwendbare Anteil der fertigen Filterelemente 4 deutlich.
b) Das Risiko einer inakzeptablen Fügegenauigkeit beim abschließenden Assembling ist deutlich minimiert wegen fehlender Abweichungen der Filterelemente 4 vom vorgegebenen Kantenmaß, da ausschließlich maßhaltige Substratbarren 3 beschichtet werden.
c) Mechanische und chemische Belastungen sowie Verunreinigungen, wie sie im Stand der Technik (infolge des Trennens der beschichteten Substratplatten) auftreten, sind vollständig ausgeschlossen.
d) Sofern beim Assembling ein Klebeschritt vorgesehen ist, werden durch die garantierte Maßhaltigkeit der Filterelemente 4 konstante Dosierungsbedingungen für die Kleberauftrag vorgefunden, die eine konstante und lückenlose stoffschlüssige Verbindung zwischen den einzelnen Filterelementen 4 ermöglichen. Damit werden die im Stand der Technik bei der Kleberdosierung auftretenden Schwierigkeiten infolge minimierter oder fehlender Oberflächenbearbeitung nach dem Trennschritt, der oftmals nicht zu ideal ebenen 31 führt, beim erfindungsgemäßen Verfahren vermieden.

Durch Ausnutzung der vorstehend beschriebenen Vorteile ergeben sich noch weitere neue und bisher nicht mögliche Ausführungen der Filterbaugruppe 5.

In einer ersten vorteilhaften Ausführung der multispektralen Filterbaugruppe werden außer der maßhaltige Abmessungen der Substratbarren 3 an den vorgesehenen Fügeflächen 31 Positionierungshilfen, wie z.B. Nut und Feder 311 bzw. 312 (Fig. 3a), Stufen 313 (Fig. 3b) oder selbstzentrierende Keile 314 (Fig. 3d), die bei der Fertigung der unbeschichteten Substratbarren 3 ohne Probleme gleich mit erzeugt werden, vorhanden, so dass das abschließende Assembling (Fig. 5) der Filterbaugruppen 5 vereinfacht wird und sich die Fertigungstoleranzen verringern. Ferner kann die Variante mit Stufen 313 in der Art gemäß Fig. 3c modifiziert werden, indem die Substratbarren 3 für benachbarte unterschiedliche Filterelemente 4 als T-Profile 32 geformt sind, die alternierend aufrecht und kopfstehend angeordnet werden.

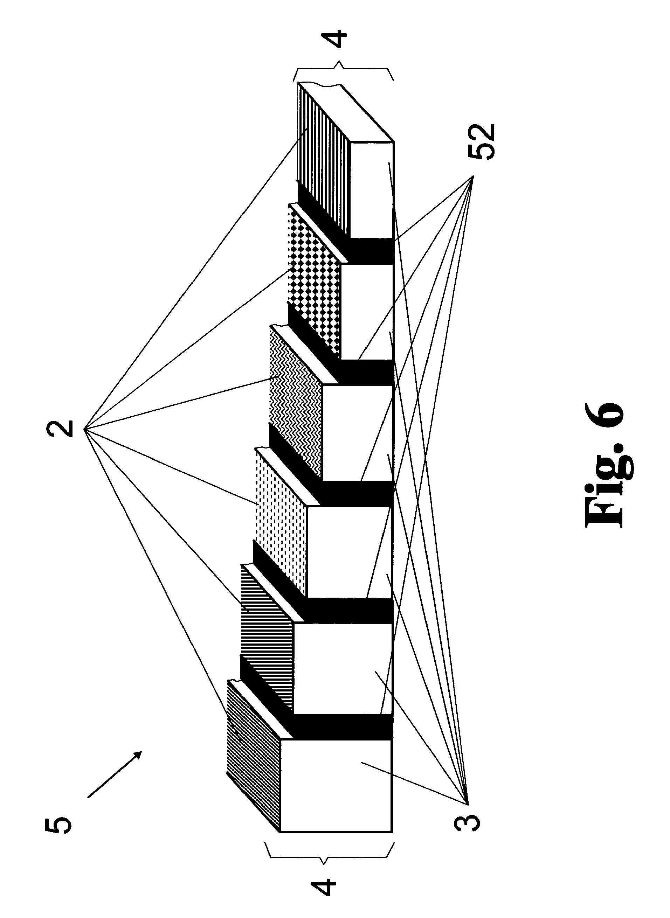

In einer zweiten Bauform der Filterbaugruppe 5 werden zum Ausgleich von spektralen Abbildungsfehlern der gemeinsamen Abbildungsoptik der (multispektralen) Zeilenkamera 1 die Substratbarren 3 für verschiedene spektrale Filterelemente 4 in unterschiedlichen Substratdicken hergestellt, um die spektral unterschiedlichen optischen Weglängen gleich in der Filterbaugruppe 5 auszugleichen. Eine ansonsten erforderliche separate Korrekturplatte entfällt dadurch. Fig. 6 zeigt dazu das Aussehen der Filterbaugruppe 5 mit angepassten, verschieden hohen Filterelementen 4 nach dem Assembling.

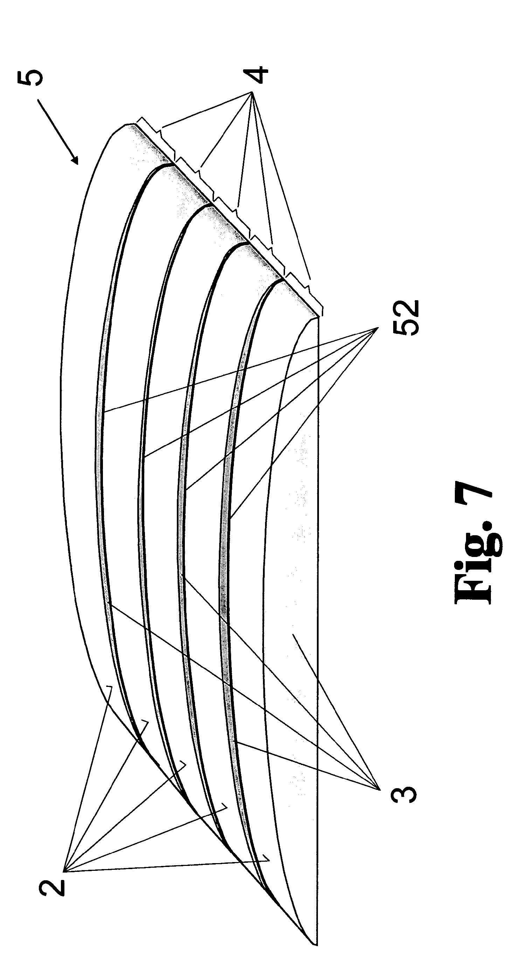

Um eine wellenlängenabhängige und/oder optische Korrektur des Strahlenganges für jeden Spektralkanal (bestehend aus Sensorzeile 11, 12, 13 usw. und individuellem Filterelement 4) zu ermöglichen, sind Substratbarren 3 mit geeignet angepasster Form und unterschiedlichen Maßen herstellbar. Eine solche Ausführung der Erfindung zeigt Fig. 7.
Die unterschiedliche Formgebung, die sowohl in Längsrichtung des Substratbarrens 3 als auch in der dazu orthogonalen Richtung möglich ist, orientiert sich an den wellenlängenabhängigen Verzeichnungen und Abbildungsfehlern.

Infolge des nachträglichen Aufbringens der Filter 2 können mit Hilfe der Formgebung des jeweiligen Substratbarrens 3 gezielt im ersten Herstellungsschritt für die Filterbaugruppe 5 alle bekannten oben beschriebenen spektralen Verzeichnungen und Abbildungsfehler berücksichtigt werden, wodurch sich die Abbildungsgüte jedes einzelnen Filterelements 4 beliebig erhöhen lässt. Ein Beispiel für eine derartige optisch korrigierte Filterbaugruppe 5 ist schematisch in Fig. 7 dargestellt. Dabei wird - wie in Fig. 6 - ebenfalls berücksichtigt, dass die einzelnen Filterelemente 4 unterschiedliche Höhe aufweisen, um die unterschiedlichen optischen Weglängen der Spektralanteile in den einzelnen Substratbarren 3 zu kompensieren.

### Bezugszeichenliste

- 1: Zeilenkamera
- 11, 12, 13: (einzelne) Sensorzeilen

- 2: Filter
- 21, 22, 23: (spektral unterschiedliche) Filterschichten

- 3: Substratbarren
- 31: Fügeflächen
- 311: Nut
- 312: Feder
- 313: Stufe
- 314: Keilform
- 32: T-Profil
- 33: gemeinsamer Substratbarren
- 331: Blendenbereich

- 4: Filterelemente

- 5: (multispektrale) Filterbaugruppe
- 51: Rahmen
- 52: (optische) Sperrschicht

- A, B, C, D, ...: Bodenstreifen

## Patentansprüche

1. Verfahren zur Herstellung von multispektralen Filterbaugruppen, die aus mehreren separat beschichteten Filterelementen zusammengesetzt werden, **gekennzeichnet durch** folgende Schritte:
- Herstellung von Substratbarren (3) aus optischem Material, das für die zu filternde Wellenlänge des jeweiligen Filterelements (4) ausreichende Transparenz aufweist, **durch** beliebige Formgebungsverfahren und anschließende Oberflächenbearbeitungsverfahren zur Erreichung einer **durch** ein optisches Aufnahmesystem vorgegebenen Maßhaltigkeit;
- Beschichtung der Substratbarren (3) mit unterschiedlichen spektralen Filtern (2) zur Erzeugung verschiedener Filterelemente 4 für eine multispektrale Filterbaugruppe (5);
- Selektieren von so erzeugten Filterelementen (4) mit hinreichender Güte ihrer spektralen Eigenschaften;
- Assembling der Filterbaugruppe (5) **durch** Zusammenfügen und Fixieren der selektierten Filterelemente (4) mit unterschiedlicher spektraler Charakteristik.

2. Verfahren nach Anspruch 1, **dadurch gekennzeichnet, dass**
die Substratbarren (3) für Filterelemente (4) unterschiedlicher Wellenlängen aus verschiedenen Materialien gefertigt werden.

3. Verfahren nach Anspruch 1, **dadurch gekennzeichnet, dass**
die Substratbarren (3) für Filterelemente (4) unterschiedlicher Wellenlängen mit unterschiedlicher Dicke hergestellt werden.

4. Verfahren nach Anspruch 1, **dadurch gekennzeichnet, dass**
die Substratbarren (3) für Filterelemente (4) unterschiedlicher Wellenlängen aus verschiedenen Materialien mit unterschiedlicher Dicke hergestellt werden.

5. Verfahren nach Anspruch 1, **dadurch gekennzeichnet, dass**
die Substratbarren (3) in einer langgestreckten Quaderform gefertigt werden.

6. Verfahren nach Anspruch 1, **dadurch gekennzeichnet, dass**
in die Substratbarren (3) bei der maßhaltigen Herstellung an beabsichtigten Fügeflächen (31) Positionierhilfen (311, 312, 313, 314) in Form von Profilkanten eingearbeitet werden.

7. Verfahren nach Anspruch 6, **dadurch gekennzeichnet, dass**
die Positionierhilfen (311, 312, 313, 314) im Zuge der Formgebungsverfahren der Substratbarren (3) eingebracht werden.

8. Verfahren nach Anspruch 6, **dadurch gekennzeichnet, dass**
die Positionierhilfen (311, 312, 313, 314) nach den Formgebungsverfahren der Substratbarren (3) mit spanenden Verfahren eingebracht werden.

9. Verfahren nach Anspruch 1, **dadurch gekennzeichnet, dass**
die Substratbarren (3) nach der maßhaltigen Herstellung einzeln beschichtet werden.

10. Verfahren nach Anspruch 1, **dadurch gekennzeichnet, dass**
mehrere Substratbarren (3) für Filterelemente (4) gleicher Wellenlänge nach der maßhaltigen Herstellung gleichzeitig beschichtet werden.

11. Verfahren nach Anspruch 10, **dadurch gekennzeichnet, dass**
mehrere Substratbarren (3) für Filterelemente (4) gleicher Wellenlänge in einem vorübergehend zusammengefügten Paketverbund beschichtet werden.

12. Verfahren nach Anspruch 1, **dadurch gekennzeichnet, dass**
Substratbarren (3) zur Integration von einigen wenigen Filterelementen (4) mit Filtern (2) verschiedener Wellenlängen nach der maßhaltigen Herstellung aufeinanderfolgend mit unterschiedlichen Filtern (2) auf unterschiedlichen Oberflächenbereichen beschichtet werden.

13. Multispektrale Filteranordnung für Zeilenkameras zur multispektralen Bildaufnahme mit mehreren unabhängig auslesbaren Sensorzeilen, bei der mehrere separat beschichtete Filterelemente unterschiedlicher spektraler Charakteristik zu einer plattenförmigen Filterbaugruppe zusammengesetzt sind, **dadurch gekennzeichnet, dass**
- Substratbarren (3) aus optischem Material, das für die vom jeweiligen Filterelement (4) zu filternden Wellenlängen ausreichende Transparenz aufweist, in einem der Filterbeschichtung vorgelagerten Formgebungs- und Oberflächenbearbeitungsprozess an unterschiedlichen zu transmittierenden Wellenlängen angepasst vorgeformt sind, um Abbildungsfehler infolge unterschiedlicher optischer Weglängen und Ablenkungswinkel der gefilterten Spektralanteile zu minimieren.

14. Anordnung nach Anspruch 13, **dadurch gekennzeichnet, dass**
die Substratbarren (3) für Filterelemente (4) unterschiedlicher Wellenlängen jeweils in einer solchen Dicke vorgefertigt sind, die an die optische Weglänge der durch das aufzubringende Filter (2) vorgegebenen spektralen Wellenlängen angepasst ist.

15. Anordnung nach Anspruch 13, **dadurch gekennzeichnet, dass**
die Substratbarren (3) für Filterelemente (4) unterschiedlicher Wellenlänge jeweils in einer solchen Dicke, die an die optische Weglänge der spektralen Filterwellenlängen angepasst ist, und mit einer gewölbten Oberflächenform, die zur Verringerung von optischen Abbildungsfehlern infolge spektral unterschiedlicher Ablenkungswinkel geformt ist, vorgefertigt sind.

16. Anordnung nach Anspruch 13, **dadurch gekennzeichnet, dass**
breitere gemeinsame Substratbarren (3) zur Integration von einigen wenigen Filterelementen (4) mit Filtern (2) verschiedener Wellenlängen nach der maßhaltigen Herstellung aufeinanderfolgend mit unterschiedlichen Filtern (2) auf unterschiedlichen Oberflächenbereichen beschichtet sind.

17. Anordnung nach Anspruch 13, **dadurch gekennzeichnet, dass**
die Substratbarren (3) für Filterelemente (4) unterschiedlicher Wellenlängen jeweils an ihren Fügeflächen (31) Positionierhilfen (311, 312, 313, 314) aufweisen, mit denen die unterschiedlichen Filterelemente (4) zu der multispektralen Filterbaugruppe (5) selbstjustierend zusammensetzbar sind.

18. Anordnung nach Anspruch 17, **dadurch gekennzeichnet, dass**
die Fügeflächen (31) benachbarter Filterelemente (4) gegenüberliegend mit Nut (311) und Feder (312) versehen sind.

19. Anordnung nach Anspruch 17 **dadurch gekennzeichnet, dass**
die Fügeflächen (31) benachbarter Filterelemente (4) mit gegenüberliegend gegensätzlichen Stufen (313) versehen sind.

20. Anordnung nach Anspruch 19, **dadurch gekennzeichnet, dass**
die Substratbarren (3) für benachbarte Filterelemente (4) als alternierend angeordnete T-Profile (32) geformt sind.

21. Anordnung nach Anspruch 17, **dadurch gekennzeichnet, dass**
die Fügeflächen (31) benachbarter Filterelemente (4) gegenüberliegend gegensätzlichem Keilprofil (314) versehen sind.
